# NEUE EUROPÄISCHE PATENTSCHRIFT

(11) **EP 0 658 729 B2**
(45) Veröffentlichungstag und Bekanntmachung des Hinweises auf die Entscheidung über den Einspruch: **11.10.2000**
(45) Hinweis auf die Patenterteilung: 14.01.1998
(21) Anmeldenummer: 94116150.7
(22) Anmeldetag: 13.10.1994
(51) Int. Cl.: F24F 13/18, E06B 7/02, F24F 7/013

(54) **Lüftungssystem**
Ventilation system
Système de ventilation

(30) Priorität: 17.12.1993 DE 4343107
(43) Veröffentlichungstag der Anmeldung: 21.06.1995
(73) Patentinhaber: FSL Fenster-System-Lüftung GmbH, D-68199 Mannheim (DE)
(72) Erfinder: Bauer, Gerhard, D-67067 Ludwigshafen (DE); Gebhardt, Hans G., D-64297 Darmstadt (DE); Ormai, Josef, D-68305 Mannheim (DE)
(74) Vertreter: Geitz, Heinrich, Dr.-Ing.

(56) Entgegenhaltungen:
- AT-B- 367 857
- DE-A- 2 905 884
- DE-A- 3 118 053
- DE-A- 3 320 993
- DE-A- 3 632 268
- DE-A- 4 204 772
- DE-C- 3 942 017
- DE-U- 7 234 160
- DE-U- 8 629 476
- DE-U- 9 313 426
- Essayie, G.H., "Mit einem zentralen Warmwasser-Heizungssystem kühlen", in: Heiz.-Lüft.-Haustechn. 19 (1968) Nr. 3 März, S. 99-101
- Prospekt " conit - Schalldämmende Zuluftelemente für Fenster und Fassade - Typ ZE 255", Fa. conit, Kassel

## Beschreibung

Die Erfindung betrifft ein für die Räume von Gebäuden bestimmtes Lüftungssystem mit im Fenster-Brüstungsbereich angeordneten Lüftungsgeräten.

Ein derartiges Lüftungssystem ist bereits aus der DE 39 42 017 C2 bekannt und hat sich bewährt. Bei diesem System wird von außen zugeführte Luft durch ein Lüftungsgerät im Gebäuderaum umgewälzt und die rauminnenseitig in Fensternähe niedersinkende Luft nach außen abgefördert.

Die DE-A-2 905 885 beschreibt eine Belüftungsanlage mit einem in einem Gehäuse gelagerten, auswechselbaren Temperieraggregat. Das Gehäuse entspricht in seiner Breite der Breite des Fensters, unter dem die Belüftungsanlage eingebaut werden soll.

Unbefriedigend bei solchen Systemen ist jedoch, daß die Dimensionierung der Lüftungsgeräte bereits bei der Konzeption der Gebäuderäume festzulegen ist und spätere Umdimensionierungen, die beispielsweise durch geänderte Zweckbestimmungen der Gebäuderäume erforderlich werden können, meist mit kostenintensiven baulichen Veränderungen verbunden sind.

Gleichfalls vorbekannt ist aus der DE 31 18 053 A1 eine Lüftungseinrichtung in einer Gebäudewand, bei der die Oberseite einer Brüstungswand mit plattenförmigen Bauelementen aus wärmedämmendem Material abgedeckt und in wenigstens eines der Bauelemente parallel zur Auflagerfläche ein Lüftungskanal eingearbeitet ist, der einen Innen- und Außenraum verbindet und als Gehäuse von Lüftungselementen, wie Gebläse, Filter oder dergleichen, verwendbar ist. Im Zusammenhang mit einem Ausführungsbeispiel ist in der Druckschrift auch die nebeneinanderliegende Einbaubarkeit je eines Zuluft- und eines Abluftgebläses in einem unterteilbaren Lüftungskanal beschrieben.

Demgegenüber liegt der Erfindung die Aufgabe zugrunde, ein Lüftungssystem der eingangs genannten Art so zu verbessern, daß in einfacher Weise eine Anpassung an die Erfordernisse des jeweiligen Bedarfsfalles möglich ist und auch bei sich nachträglich ändernden Umständen auf kostensparende und wirtschaftliche Weise gelingt.

Diese Aufgabe ist dadurch gelöst, daß bei einem für die Räume von Gebäuden bestimmten Lüftungssystem mit im Fenster-Brüstungsbereich angeordneten Lüftungsgeräten in wenigstens zwei unter zumindest einem Fenster nebeneinanderliegend angeordneten Gehäuse-Aufnahmekammern jeweils wenigstens ein als modularer Einschub ausgebildetes Lüftungsgerät austauschbar aufgenommen und jede Gehäuse-Aufnahmekammer mit Öffnungen für den Lufteinlaß und den Luftauslaß versehen ist, die in Abhängigkeit von der Art des jeweils eingesetzten modularen Einschubes selektiv durch letzteren offen gelassen oder verschlossen werden.

Bei der Erfindung handelt es sich somit darum, daß unter einem Fenster oder unter nebeneinander angeordneten Fenstern, nebeneinanderliegende Gehäuse-Aufnahmekammern vorgesehen sind, die in Anpassung an den jeweiligen Bedarfsfall mit der erforderlichen Anzahl und Art von Lüftungsgeräten in Modulbauweise ausrüstbar sind. Dadurch gelingt bei veränderter Zweckbestimmung eines Raumes mit sich entsprechend ändernden Lüftungsparametern eine kostengünstige und flexible Anpassung an die jeweiligen Bedürfnisse, wobei die jeweils nicht benötigten Lufteinlaß- und Luftauslaßöffnungen der Gehäuse-Aufnahmekammer durch die eingesetzten modularen Einschübe verschlossen und die anderen Öffnungen an die entsprechenden Geräteöffnungen angeschlossen werden.

Eine vorteilhafte Weiterbildung der Erfindung sieht vor, daß unter wenigstens einer Gehäuse-Aufnahmekammer ein auf den Durchfluß von Kühlmedium umschaltbarer Wärmetauscher angeordnet und in der darüberliegenden Aufnahmekammer ein Umluftgerät zum Umwälzen von Raumluft mit einem im wesentlichen auf den Wärmetauscher gerichteten Luftauslaß aufgenommen ist. Eine derartige Anordnung ermöglicht eine Rezirkulation der in einem Raum umgewälzten Luft über den Wärmetauscher und mithin eine der jeweiligen Jahreszeit angepaßte Raumklimatisierung. Im Winter und in den übergangszeiten ist der Wärmetauscher hingegen konventionell als Heizung einsetzbar.

Dabei hat sich als besonders zweckmäßig erwiesen, wenn bei Räumen mit in einer Lochfassade nebeneinanderliegenden Fenstern unter wenigstens zwei Fenstern jeweils ein Gehäuse mit zumindest einer Aufnahmekammer für ein Lüftungsgerät angeordnet ist. Auch bei einer derartigen Ausbildung getrennter Gehäuse ist die Umluftführung im Raum über einen auf den Durchfluß von Kühlmedium umschaltbaren Heizkörper möglich, desgleichen aber auch die Kühlung von außen zugeführter Zuluft, was im Sommerbetrieb von Bedeutung sein kann.

Alternativ dazu kann sich aber auch ein Gehäuse mit wenigstens zwei nebeneinanderliegenden Aufnahmekammern für jeweils zumindest ein Lüftungsgerät über jedenfalls einen wesentlichen Teil der jeweiligen Raumbreite durchlaufend erstrecken. Eine derartige Ausbildung des Gehäuses mit Aufnahmekammern für die Lüftungsgeräte bietet sich insbesondere bei durchlaufenden Fensterzeilen an, in welchem Falle zweckmäßigerweise sich das Gehäuse mit nebeneinanderliegenden Aufnahmekammern im wesentlichen über die gesamte Breite der Fensterzeilen erstrecken kann.

Bei Gehäusen mit wenigstens zwei nebeneinanderliegend angeordneten Aufnahmekammern für jeweils mindestens ein Lüftungsgerät hat sich auch als sinnvoll erwiesen, die Kammern gegeneinander schallgedämpft auszubilden. Dieser Maßnahme kommt Bedeutung bei solchen Gehäusen zu, die sich über durchlaufende Fensterzeilen oder unter zwei beabstandeten Fenstern entlangerstrecken, wenn in Abhängigkeit von der jeweiligen Raumnutzung zwischen derartigen Fenstern oder auch im Bereich durchlaufender Fensterzeilen beispielsweise in Trockenbauweise ausgeführte Trennwände vorgesehen sind und eine Längsschalldämmung zwischen den dann durch diese Trennwände voneinander getrennten Räumen erforderlich werden kann.

Um abzuführende Abluft von zuzuführender Frischluft im Eintrittsbereich des Lüftungssystems zu trennen, sieht eine andere sinnvolle Weiterbildung der Erfindung vor, daß jede Gehäuse-Aufnahmekammer wenigstens zwei nach außen weisende und voneinander beabstandete Öffnungen sowie wenigstens zwei zum Innenraum hin angeordnete Öffnungen besitzt.

Bei einer mit einem Umluftgerät ausgerüsteten Aufnahmekammer sind deren nach außen weisende Öffnungen durch das Umluftgerät verschlossen, während die zum Innenraum hin angeordneten Öffnungen an die Luftführung des Umluftgerätes angekoppelt sind.

Andererseits koppeln bei einer mit einem jeweils eine Zu- und Abluftfunktion aufweisenden Lüftungsgerät bestückten Aufnahmekammer die nach innen und außen weisenden Öffnungen der das Gerät aufnehmenden Aufnahmekammer an die Luftführung des Lüftungsgerätes an.

Nach einer nochmals anderen Ausgestaltung kann anstelle eines Lüftungsgerätes auch ein als modularer Einschub augebildeter Isoliermaterialeinsatz in einer für die Installation eines Lüftungsgerätes nicht benötigten Aufnahmekammer aufgenommen sein, der dann die zur Luftzirkulation vorgesehenen Öffnungen der Aufnahmekammer verschließt. Die Öffnungen für die Luftzufuhr und -abfuhr sind somit bei Aufnahmekammern ohne Lüftungsgerät mittels derartiger Isoliermaterialeinsätze sicher verschließbar, während bei Aufnahmekammern mit eingebauten Lüftungsgeräten nur die für die Art des jeweils verwendeten Lüftungsgerätes erforderlichen Öffnungen an das Gerät angekoppelt, hingegen nicht benötigte Öffnungen verschlossen sind.

Nach einer gleichfalls weiterbildenden Maßnahme besitzt jede Gehäuse-Aufnahmekammer einen abnehmbaren Vorsatz zum Verschließen einer Einschuböffnung des Gehäuses, die den problemlosen Austausch eines installierten Lüftungsgerätes gegen ein anderes Gerät oder einen Isoliermaterialeinsatz ermöglicht. Eine besonders einfache Handhabbarkeit ergibt sich, wenn der Vorsatz rauminnenseitig angeordnet ist. Dabei sollte der Vorsatz den zum Wärmetauscher gerichteten Luftauslaß aufweisen.

Schließlich sieht eine abermalige Weiterbildung der Erfindung vor, daß die Gehäuse-Aufnahmekammern in vertikaler Hinsicht Übermaß gegenüber den Lüftungsgeräten aufweisen und sich bei eingebauten Lüftungsgeräten zwischen diesen und dem oberseitigen Abschluß der jeweiligen Aufnahmekammer ein Luftführungskanal erstreckt, der im Eckbereich zum Fenster mit einer Eintrittsöffnung für Raumluft versehen ist. Bei einer derartigen Ausbildung der Aufnahmekammern strömt im zugeordneten Raum umgewälzte oder aus letzterem abzuführende Raumluft durch die genannte Eintrittsöffnung in den über dem jeweiligen Gerät verlaufenden Luftführungskanal ein und wird von diesem als Umwälzluft in den Raum zurückgeleitet oder als Abluft nach außen abgeführt.

Anhand der beigefügten Zeichnung sollen nachstehend verschiedene Ausführungsformen der Erfindung erläutert werden. In schematischen Ansichten zeigen:
- Fig. 1: einen Ausschnitt eines erfindungsgemäßen Lüftungssystems mit einem mehrere nebeneinanderliegende Aufnahmekammern aufweisenden und sich über eine durchlaufende Fensterzeile erstreckenden Gehäuse in einer perspektivischen Darstellung,
- Fig. 2: das in Fig. 1 gezeigte Lüftungssystem in einem Horizontalschnitt, wobei eine Aufnahmekammer mit einem Lüftungsgerät bestückt und eine weitere Aufnahmekammer mit einem Isoliermaterialeinsatz versehen ist, während eine dazwischen befindliche Aufnahmekammer gerade mit einem Lüftungsgerät bestückt wird und dazu ein rauminnenseitig angeordneter Gehäusevorsatz abgenommen ist,
- Fig. 3: das Lüftungssystem gemäß Fig. 1 in einer Draufsicht,
- Fig. 4: in einer vertikalen Schnittansicht ein in bestimmungsgemäßer Lage in einer durch den Vorsatz abgeschlossenen Aufnahmekammer des Gehäuses aufgenommenes Lüftungsgerät,
- Fig. 5: in einer Fig. 4 entsprechenden Ansicht ein bei abgenommenem Vorsatz teilweise in eine Aufnahmekammer eingeschobenes Lüftungsgerät,
- Fig. 6: ebenfalls in einer Ansicht wie in Fig. 4 eine mit einem Isoliermaterialeinsatz ausgefüllte Aufnahmekammer des Gehäuses,
- Fig. 7: in einer Ansicht wie Fig. 4 eine alternative Gehäuseausbildung mit einem in einer Aufnahmekammer eingebauten Lüftungsgerät und einem sich zwischen letzterem und einer oberseitigen Gehäuseabdeckung erstreckenden Luftführungskanal,
- Fig. 8: analog zu Fig. 5 das Gehäuse gemäß Fig. 8 mit einem teilweise in eine Aufnahmekammer eingeschobenen Lüftungsgerät und
- Fig. 9: in einer Frontansicht mit Blick aus einem Raum heraus ein Lüftungssystem, bei dem unter seitlich beabstandeten Fenstern einer Lochfassade jeweils voneinander getrennte Gehäuse mit zumindest einer Aufnahmekammer je Gehäuse und unter letzteren wiederum Heizkörper angeordnet sind, von denen wenigstens einer auf den Durchfluß von Kühlmedium umschaltbar ist.

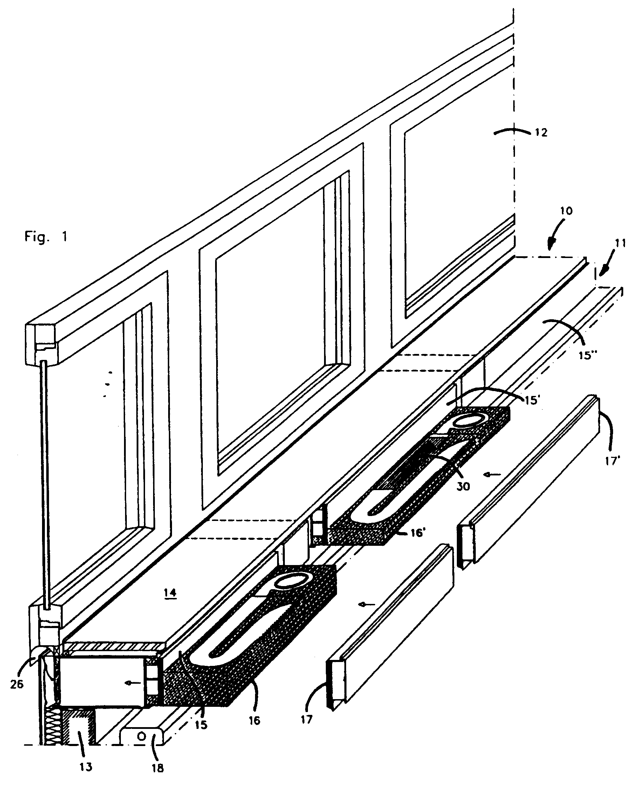

Das in Fig. 1 gezeigte, für Räume von Gebäuden bestimmte Lüftungssystem 10 besitzt ein Gehäuse 11, welches zwischen einem Fenster 12 und einer darunter befindlichen Brüstungswand 13 eingebaut ist. Das Gehäuse 11 des Lüftungssystems 10 reicht im wesentlichen über die gesamte Breite des sich zwischen nur angedeuteten Stützen beispielsweise eines in Skelettbauweise erstellten Bauwerks erstreckenden Fensters 12 und ist oberseitig von einer rauminnenseitigen Fensterbank 14 abgedeckt. In Richtung seiner Längserstreckung besitzt das Gehäuse 11 nebeneinanderliegende Aufnahmekammern 15, die für die Aufnahme jeweils eines Lüftungsgerätes 16 bestimmt und rauminnenseitig jeweils mit einem abnehmbaren Vorsatz 17 versehen sind. Bei abgenommenem Vorsatz 17 kann jeweils ein Lüftungsgerät 16 in die entsprechende Aufnahmekammer 15 eingeschoben werden. Bei der hier vorliegenden Ausführungsform haben die Aufnahmekammern 15, 15',15'' gleiche Abmessungen, die auf Standardmaße der als modulare Einschübe ausgebildeten Lüftungsgeräte 16, 16' abgestimmt sind.

Unter dem Gehäuse 11 des Lüftungssystems 10 ist ein sich etwa über die Breite de Fensters 12 erstreckender Wärmetauscher 18 angeordnet, der wahlweise auf den Durchfluß von Kühlmedium umschaltbar ist und damit je nach Jahreszeit als Heizung oder Kälteaggregat betrieben werden kann.

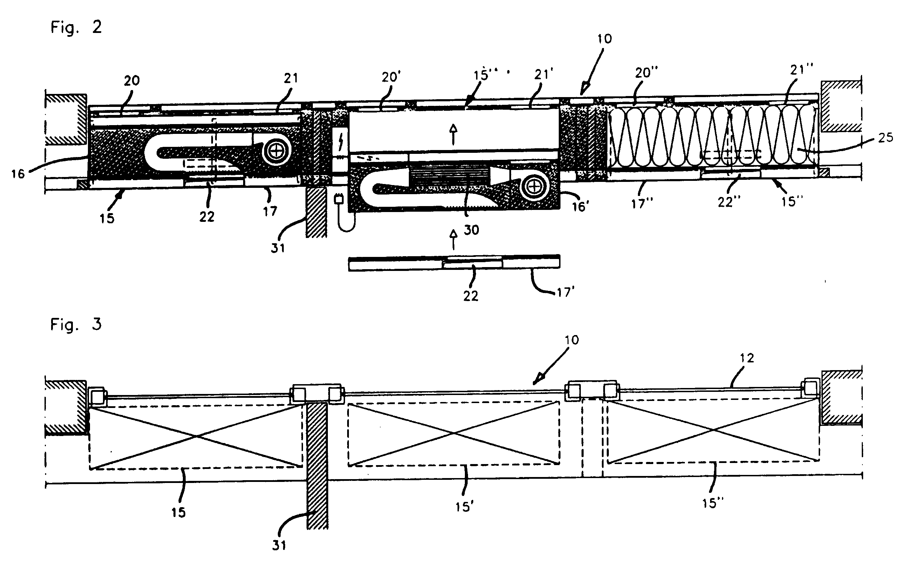

Wie Fig. 2 zeigt, können die Aufnahmekammern 15, 15', 15'' jeweils unterschiedliche Typen von Lüftungsgeräten 16, 16' aufnehmen. Vorliegend ist für die mittlere Aufnahmekammer 15' ein Lüftungsgerät 16' mit je einer Zuluft- und Fortluftsektion sowie eingebautem Wärmetauscher vorgesehen, während in einer benachbarten äußeren Aufnahmekammer 15 ein Umluftgerät 16 zum Umwälzen von Raumluft installiert ist. Eine weitere Aufnahmekammer 15'' enthält einen ebenfalls als Modul ausgebildeten Isoliermaterialeinsatz 25, der im Bedarfsfalle gegen ein Lüftungsgerät austauschbar ist.

Das Gehäuse 11 des Lüftungssystems 10 ist in der Weise mit Öffnungen versehen, daß jede Aufnahmekammer in ihrer Außenstirnwand jeweils zwei horizontal beabstandete Öffnungen 20, 21; 20', 21'; 20'', 21'' für den Einlaß von Zuluft und für den Auslaß von Fortluft besitzt und innenraumseitig jeweils eine Öffnung 22, 22', 22'' für den rauminnenseitigen Lufteinlaß vorgesehen ist. Zweckmäßigerweise ist die innenraumseitige Öffnung in dem der jeweiligen Aufnahmekammer zugeordneten Vorsatz 18, 18', 18'' angeordnet.

Beim Ausrüsten einer Aufnahmekammer mit einem lediglich zum Umwälzen von Raumluft dienenden Umluftgerät 16 werden die nach außen weisenden Öffnungen 20, 21 der Aufnahmekammer 15 durch das eingebaute Umluftgerät verschlossen, während die rauminnenseitigen Öffnungen 22, 23 in der Aufnahmekammer an die Luftführung des Umluftgerätes 16 angekoppelt sind.

Wird hingegen, wie Fig. 2 zeigt, eine Aufnahmekammer 15' mit einem Lüftungsgerät 16' ausgerüstet,das eine Zu- und Abluftsektion 28, 29 mit eingebautem Wärmetauscher 30 hat, so werden sowohl die im Außenwandbereich vorgesehenen horizontal beabstandeten Öffnungen 20', 21' wie auch die innenraumseitigen Öffnungen 22', 23' der Aufnahmekammer an die Luftführung des Lüftungsgerätes angekoppelt.

Eine nicht benötigte Aufnahmekammer des Gehäuses 11 ist mittels eines Isoliermaterialeinsatzes ausfüllbar. Dies zeigt Fig. 2 rechts. Dort ist die Aufnahmekammer 15 '' mit einem Isoliermaterialeinsatz 25 versehen, durch den die Öffnungen 20'', 21'', 22'', 23'' verschlossen sind. Bei entsprechendem Bedarf, beispielsweise bei Änderung der Raumbelegung oder seiner Zweckbestimmung, kann ein derartiger Isoliermaterialeinsatz 25 gegen ein Lüftungsgerät ausgetauscht werden, wobei die entsprechend benötigten Öffnungen der Aufnahmekammer in der obenbeschriebenen Weise wieder an die Luftführung des Lüftungsgerätes ankoppelbar sind.

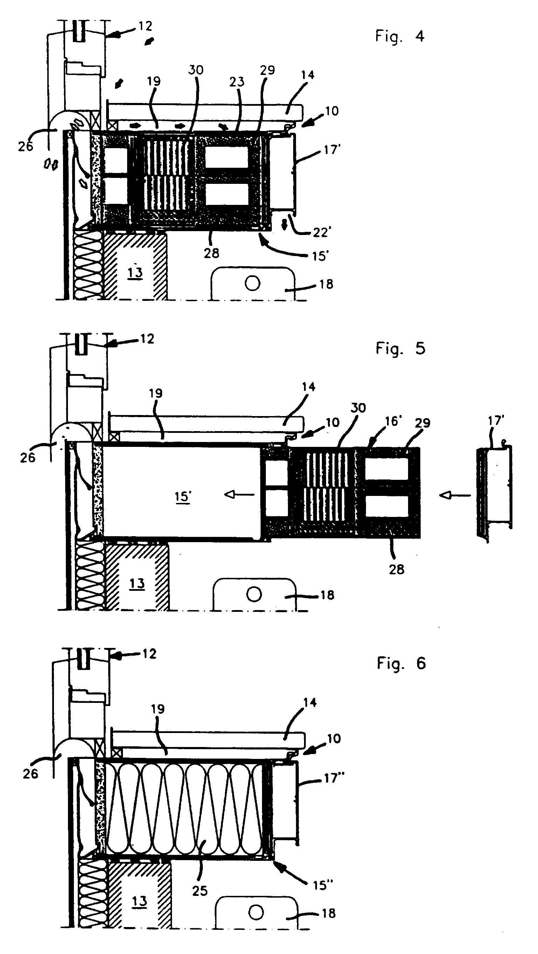

Fig. 4 zeigt das je eine Zu- und Abluftsektion 28, 29 aufweisende Lüftungsgerät 16' im eingebauten Zustand in der Aufnahmekammer 15'. Über eine im Brüstungsbereich unterhalb des Fensters 12 angeordnete äußere Vorsatzkammer 26, die sich etwa über die Breite der jeweiligen Aufnahmekammer erstreckt, wird Außenluft angesaugt, durch eine entsprechende in der Außenwand der Aufnahmekammer befindliche Öffnung in der Zuluftsektion 28 des Lüftungsgerätes zugeführt und über den geräteseitigen Wärmetauscher 30 und die in dem rauminnenseitigen Vorsatz 17' vorgesehene Öffnung 22' in den Innenraum geleitet.

Die genannte Lufteintrittsöffnung 22' ist nach unten gerichtet und bildet den rauminnenseitigen Einlaß für die Zuluft. Unter dem rauminnenseitig vorstehenden Teil des Lüftungssystems 10 ist der Wärmetauscher 18 angeordnet, dem die Öffnung 22' des Vorsatzes 17' bei bestimmungsgemäßer Befestigung an der Aufnahmekammer 15' zugewandt ist. Von der Zuluftsektion 28 in den Innenraum einströmende Zuluft umströmt den Wärmetauscher 18, wird dabei erwärmt und steigt im Raum auf, um danach im Bereich vor dem Fenster 12 abzusinken und zumindest teilweise als Fortluft abgeführt zu werden. Diese Fortluft tritt über einen zwischen der Fensterbank 14 und der Oberseite des Gehäuses 11 ausgebildeten Strömungskanal 19 in die Abluftsektion 29 des Lüftungsgerätes 16' ein. Von dort aus wird die Fortluft über die außenseitige Öffnung 21' der Aufnahmekammer in die Vosatzkammer 26 und von dort nach außen abgeführt.

Fig. 5 zeigt, wie bei abgenommenem Vorsatz 17 das Lüftungsgerät 16' in die geöffnete Aufnahmekammer 15' eingeschoben wird. Nach dem Einbau des Geräts in die Aufnahmekammer wird diese durch Aufsetzen des Vorsatzes 17 verschlossen.

In Fig. 6 ist ein Vertikalschnitt durch die Aufnahmekammer 15'' mit einem in dieser aufgenommenen, in Modulbauweise ausgebildeten Isoliermaterialeinsatz 25 gezeigt. Rauminnenseitig ist diese Aufnahmekammer, ebenso wie die in Fig. 4 gezeigte Aufnahmekammer 15', mittels eines Vorsatzes 17'' verschlossen. Dieser Isoliermaterialeinsatz sperrt alle der Aufnahmekammer 15'' zugeordneten außen- und innenseitigen Öffnungen ab.

Unter Bezugnahme auf die Fig. 2 und 3 sei noch angemerkt, daß in der Längenerstreckung des Gehäuses 11 durchaus Raumunterteilungen durch einfügbare Zwischenwände 31 vorgenommen werden können. Die nebeneinander liegenden Aufnahmekammern eines Gehäuses können somit dem Lüftungssystem verschiedener Räume zugeordnet sein. Um insoweit Längsschallübertragungen zu unterbinden, sind zwischen den benachbarten Aufnahmekammern 15, 15', 15'' jeweils mit schalldämmenden Mitteln ausgerüstete Wandelemente vorgesehen.

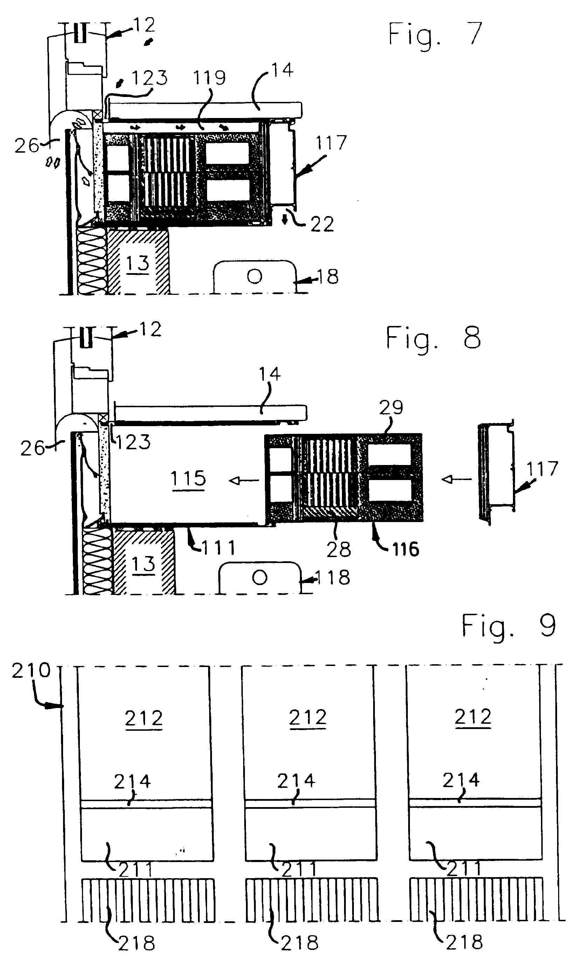

In den Fig. 7 und 8 sind für gleiche Teile wie in den Fig. 4 und 5 die gleichen Bezugszeichen verwendet worden, jedoch bei abweichender Ausbildung der Bauteile um 100 erhöht.

Bei der in diesen Figuren veranschaulichten alternativen Gehäuseausbildung ist die Höhe des Gehäuses 111 größer als bei der in den Fig. 4 bis 6 veranschaulichten Ausführungsform. Die sich unter einem Fenster entlangerstreckende Fensterbank 14 liegt unmittelbar auf der oberen Gehäuseabdeckung auf und zwischen dem in der Zeichnung veranschaulichten Lüftungsgerät 116 mit je einer Zuluft- und einer Abluftsektion 28, 29 und der oberen Gehäuseabdeckung erstreckt sich ein Luftführungskanal 119. Die obere Gehäuseabdeckung hat in jeder Kammer eine Lufteinlaßöffnung 123, durch die vor dem Fenster 12 niederfallende Raumluft in den Lüftungskanal eintritt, wie die in Fig. 7 angedeuteten Strömungspfeile zeigen, und dann über die Abluftsektion des im übrigen mit dem Lüftungsgerät gemäß Fig. 4 identischen Lüftungsgerätes und die raumaußenseitige Vorsatzkammer 26 abgeführt wird. Die Zuluftzufuhr erfolgt in gleicher Weise, wie oben in Verbindung mit Fig. 4 erläutert, wobei über die auf den als Radiator ausgebildeten Wärmetauscher 18 gerichtete Zuluft-Eintrittsöffnung 22 des Vorsatzes 117 die Zuluft über den genannten Wärmetauscher in den Raum eingeführt wird.

Fig. 8 korrespondiert mit Fig. 5, zeigt aber das aus Fig. 7 ersichtliche Gehäuse 11, dessen Aufnahmekammern eine größere Vertikalerstreckung als das teilweise in die Aufnahmekammer eingeschobene Lüftungsgerät aufweisen.

In Fig. 9 sind für gleiche Teile widerum die gleichen Bezugszeichen eingeführt, zur Unterscheidung jedoch noch einmal mit einhundert erhöht.

Bei dem in Fig. 9 in einer Frontansicht mit Blick aus einem Raum heraus veranschaulichten Lüftungssystem 210 handelt es sich darum, daß unter nebeneinander beabstandeten Fenstern 212 einer Lochfassade jeweils ein Gehäuse 211 mit zumindest einer Aufnahmekammer durch ein Lüftungsaggregat angeordnet ist. Oberseitig sind die Gehäuse mit den Aufnahmekammern für den Einbau von Lüftungsaggregaten wieder in der aus den Fig. 4 bis 8 ersichtlichen Weise mittels hier nicht weiter interessierender Fensterbänke 214 abgedeckt und jeweils im Winkel zwischen diesen Fensterbänken und den Fenstern erstrecken sich als Längsschlitze ausgebildete Eintrittsöffnungen für aus dem Raum abzuführende oder in diesem umzuwälzende Luft, die vor den Fenstern niedersinkt und dann entweder mittels der Abluftsektion eines Lüftungsgerätes in bereits dargelegter Weise nach außen abgeführt oder aber in den Raum zurückgeleitet wird.

Jeweils unter einem Gehäuse 211 mit zumindest einem Aufnahmeraum für ein Lüftungsgerät befindet sich ein zu der Raumheizung gehörender Wärmetauscher in Form eines Radiators 218, der in der aus den Fig. 4 bis 8 ersichtlichen Weise zumindest zum Teil unter einer rauminnenseitigen Austrittsöffnung für das Zuführen von Zuluft oder das Umwälzen von Umluft angeordnet ist. Zumindest in einem der unter den Fenstern 212 angeordneten Gehäuse 211 ist, wie ebenfalls oben beschrieben, ein Umluftgerät aufgenommen und der rauminnenseitige Luftauslaß der dieses Lüftungsgerät aufnehmenden Aufnahmekammer ist auf einen Radiator 218 gerichtet, der im Bedarfsfalle auf den Durchlaß von Kühlmedium umschaltbar und mithin als Kühleinrichtung beispielsweise für im Raum gewälzte Umluft oder von außen mit hohen sommerlichen Temperaturen zugeführte Zuluft brauchbar ist.

## Patentansprüche

1. Für die Räume von Gebäuden bestimmtes Lüftungssystem mit im Fenster-Brüstungsbereich angeordneten Lüftungsgeräten, bei dem in wenigstens zwei unter zumindest einem Fenster (12, 212) nebeneinanderliegend angeordneten Gehäuse-Aufnahmekammern (15, 15', 15'', 115) jeweils wenigstens ein als modularer Einschub ausgebildetes Lüftungsgerät (16, 16', 116) austauschbar aufgenommen und jede Gehäuse-Aufnahmekammer (15, 15', 15'', 115) mit Öffnungen (20, 22, 20', 22', 20'', 22'') für den Lufteinlaß und Öffnungen (21, 23, 123) für den Luftauslaß versehen ist, die in Abhängigkeit von der Art des jeweils eingesetzten modularen Einschubes selektiv durch letzteren offen gelassen oder verschlossen sind.

2. Lüftungssystem nach Anspruch 1, dadurch gekennzeichnet, daß unter wenigstens einer Aufnahmekammer (15, 15', 15'', 115) des sich unter dem Fenster (12, 212) entlangerstreckenden Gehäuses (11, 111, 211) ein auf den Durchfluß von Kühlmedium umschaltbarer Wärmetauscher (18, 118, 218) angeordnet und in der darüberliegenden Aufnahmekammer ein Umluftgerät zum Umwälzen von Raumluft mit einem im wesentlichen auf den Wärmetauscher (18, 118, 218) gerichteten Luftauslaß (22) aufgenommen ist.

3. Lüftungssystem nach Anspruch 1 oder 2, dadurch gekennzeichnet, daß bei Räumen mit in einer Lochfassade nebeneinanderliegenden Fenstern unter wenigstens zwei Fenstern jeweils ein Gehäuse mit zumindest einer Aufnahmekammer für ein Lüftungsgerät angeordnet sind.

4. Lüftungssystem nach einem der Ansprüche 1 bis 2, dadurch gekennzeichnet, daß sich ein Gehäuse (11) mit wenigstens zwei nebeneinanderliegenden Aufnahmekammern (15, 15', 15'', 115) für jeweils zumindest ein Lüftungsgerät über jedenfalls einen wesentlichen Teil der jeweiligen Raumbreite durchlaufend erstreckt.

5. Lüftungssystem nach Anspruch 4, dadurch gekennzeichnet, daß bei durchlaufenden Fensterzeilen (12) sich das Gehäuse mit den nebeneinander angeordneten Aufnahmekammern (15, 15', 15'', 115) für jeweils wenigstens ein Lüftungsgerät im wesentlichen über die gesamte Breite der Fensterzeile erstreckt.

6. Lüftungssystem nach Anspruch 4 oder 5, dadurch gekennzeichnet, daß bei Gehäusen (11) mit wenigstens zwei nebeneinanderliegend liegend angeordneten Aufnahmekammern (15, 15', 15'', 115) für jeweils mindestens ein Lüftungsgerät die Kammern gegeneinander schallgedämmt ausgebildet sind.

7. Lüftungssystem nach einem der Ansprüche 1 bis 6, dadurch gekennzeichnet, daß jede Aufnahmekammer (15, 15', 15'', 115) wenigstens zwei nach außen weisende und voneinander beabstandete Öffnungen (20, 21, 20', 21', 20'', 21'') sowie wenigstens zwei zum Innenraum hin angeordnete Öffnungen (22, 23, 123) besitzt.

8. Lüftungssystem nach einem der Ansprüche 1 bis 7, dadurch gekennzeichnet, daß bei einer mit einem Umluftgerät (16) bestückte Aufnahmekammer (15, 115) deren nach außen weisenden Öffnungen (20, 21) durch das Umluftgerät (16) verschlossen sind, während die zum Innenraum hin angeordneten Öffnungen (22, 23, 123) an die Luftführung des Lüftungsgerätes ankoppeln.

9. Lüftungssystem nach einem der Ansprüche 1 bis 7, dadurch gekennzeichnet, daß bei einer mit einem jeweils eine Zu- und Abluftfunktion (28, 29) aufweisenden Lüftungsgerät (16) bestückten Aufnahmekammer (15', 115) deren nach innen und außen weisenden Öffnungen (20', 21', 22', 23', 123) an die Luftführung des Lüftungsgerätes (16) ankoppeln.

10. Lüftungssystem nach einem der Ansprüche 1 bis 7, dadurch gekennzeichnet, daß für die Installation von Lüftungsgeräten nicht benötigte Gehäuse-Aufnahmekammern (15'') jeweils mit einem als modularer Einschub ausgebildeten Isoliermaterialeinsatz (25) ausgerüstet und durch diesen die zur Luftzirkulation vorgesehenen Öffnungen der jeweiligen Aufnahmekammer verschlossen sind.

11. Lüftungssystem nach einem der Ansprüche 1 bis 10, dadurch gekennzeichnet, daß jede Aufnahmekammer (15, 15', 15'') des Gehäuses (11, 111, 211) wenigstens einen abnehmbaren Vorsatz (17, 17', 17''; 117) zum Verschließen einer Einschuböffnung aufweist.

12. Lüftungssystem nach Anspruch 11, dadurch gekennzeichnet, daß der abnehmbare Vorsatz (17, 17', 17''; 117) als rauminnenseitige Gehäusewand ausgebildet ist.

13. Lüftungssystem nach Anspruch 12, dadurch gekennzeichnet, daß der abnehmbare Vorsatz (17, 17', 17''; 117) dem Wärmetauscher (18, 118, 218) zugewandten Luftauslaß (22, 22', 22'') aufweist.

14. Lüftungssystem nach einem der Ansprüche 1 bis 13, dadurch gekennzeichnet, daß die Gehäuse-Aufnahmekammern (115) in vertikaler Hinsicht Übermaß gegenüber den Lüftungsgeräten aufweisen und sich bei eingebauten Lüftungsgeräten zwischen diesen und dem oberseitigen Abschluß der jeweiligen Aufnahmekammer ein Luftführungskanal (119) erstreckt, der im Eckbereich zum Fenster mit einer Eintrittsöffnung (123) für Raumluft versehen ist.

## Claims

1. Ventilation system intended for the rooms of buildings and with ventilation appliances arranged in the window ledge regions in which at least one respective ventilation appliance (16, 16', 16'') constructed as a modular insert is exchangeably received in each of at least two housing receptacle chambers (15, 15', 15'', 115) arranged to lie one beside the other below at least one window (12, 212) and each housing receptacle chamber (15, 15', 15'', 115) is provided with openings (20, 22, 20', 22', 20'', 22'') for the air inlet and openings (21, 23, 123) for the air outlet, which openings are in dependence on the kind of the respectively used modular insert selectively left open or closed by the latter.

2. Ventilation system according to claim 1, characterised thereby, that a heat exchanger (18, 118, 218), which is switchable over for the throughflow of cooling medium, is arranged below at least one receptacle chamber (15, 15', 15'', 115) of the housing (11, 111, 112) extending along below the window (11, 111, 211) and an air-circulating device for the circulation of room air and with an air outlet (22) directed substantially towards the heat exchanger (18, 118, 218) is received in the receptacle chamber lying thereover.

3. Ventilation system according to claim 1 or 2, characterised thereby, that in the case of rooms with windows lying one beside the other in a hole facade, a respective housing with at least one receptacle chamber for a ventilation appliance is arranged below each of at least two windows.

4. Ventilation system according to one of the claims 1 and 2, characterised thereby, that a housing (11) with at least two receptacle chambers (15, 15', 15'', 115), which lie one beside the other each for at least one respective ventilation appliance, extends continuously over at least a substantial part of the respective room width.

5. Ventilation system according to claim 4, characterised thereby, that in the case of continuous window lines (12), the housing with the receptacle chambers (15, 15', 15'', 115), which are arranged one beside the other each for at least one respective ventilation appliance, extends substantially over the entire width of the window line.

6. Ventilation system according to claim 4 or 5, characterised thereby, that in the case of housings (11) with at least two receptacle chambers (15, 15' 15'', 115), which are arranged to lie one beside the other, for at least one respective ventilation appliance the chambers are constructed to be sound-insulated each from the other.

7. Ventilation system according to one of the claims 1 to 6, characterised thereby, that each receptacle chamber (15, 15', 15'', 115) has at least two openings (20, 21, 20', 21', 20'', 21''), which face outwards and are spaced one from the other, as well as at least two openings, (22, 23, 123), which are arranged towards the interior space.

8. Ventilation system according to one of claims 1 to 7, characterised thereby, that in the case of a receptacle chamber (15, 115), which is equipped with an air-circulating device (16), its outwardly facing openings (20, 21) are closed by the air-circulating device (16), whilst the openings (22, 23, 123), which are arranged towards the interior space, couple to the air guide of the ventilating device.

9. Ventilation system according to one of claims 1 to 7, characterised thereby, that in the case of a receptacle chamber (15', 115), which is equipped with a ventilating device (16) having each of an air feed and an air discharge function (28, 29), its inwardly and its outwardly facing openings (20', 21', 22', 23', 123) couple to the air guide of the ventilating device (16).

10. Ventilation system according to one of claims 1 to 7, characterised thereby, that housing receptacle chambers (15''), which are not needed for the installation of ventilating devices, are each equipped with a respective insulating material insert (25) constructed as a modular insert and the openings, which are provided for air circulation, of the respective receptacle chamber are closed by these.

11. Ventilation system according to one of claims 1 to 10, characterised thereby, that each receptacle chamber (15, 15', 15'') of the housing (11, 111, 211) comprises at least one removable attachment (17, 17', 17''; 117) for the closing of an insertion opening.

12. Ventilation system according to claim 11, characterised thereby, that the removable attachment (17, 17', 17''; 117) is constructed as housing wall on the inside of the room.

13. Ventilation system according to claim 12, characterised thereby, that the removable attachment (17, 17', 17''; 117) displays the air outlet (22, 22', 22'') facing the heat exchanger (18, 118, 218).

14. Ventilation system according to one of the claims 1 to 13, characterised thereby, that the housing receptacle chambers (115) in vertical aspect display excess dimension relative to the ventilating devices and, in the case of ventilating devices having been installed, an air guide channel (119) extends between these and the upper termination of the respective receptacle chamber, which channel is provided in the corner region towards the window with an entry opening (123) for room air.

## Revendications

1. Système d'aération destiné aux locaux de bâtiments, comportant des appareils d'aération disposés dans la zone de l'allège des fenêtres, où au moins un appareil d'aération (16, 16', 116), configuré comme un tiroir modulaire, est logé d'une manière interchangeable dans au moins deux compartiments de caisson (15, 15', 15'', 115) disposés les uns à côté des autres en dessous d'au moins une fenêtre (12, 112) et chaque compartiment de caisson (15, 15', 15'', 115) est pourvu d'ouvertures (20, 22, 20', 22', 20'', 22'') pour l'entrée de l'air, et des ouvertures (21, 23, 123) pour l'évacuation de l'air qui, en fonction de la nature du tiroir modulaire utilisé dans chaque cas, sont laissées sélectivement ouvertes par ce dernier ou sont sélectivement fermées par ce dernier.

2. Système d'aération selon la revendication 1, caractérisé en ce que, au moins en dessous d'un compartiment (15, 15', 15'', 115) du caisson (11, 111, 211) s'étendant longitudinalement en dessous de la fenêtre (12, 212), on a disposé un échangeur de chaleur (18, 118, 218), pouvant être commuté pour permettre le passage d'un fluide frigorigène, et un appareil de reprise d'air, destiné à mettre en recirculation l'air ambiant à l'aide d'une sortie d'air (22) essentiellement dirigée vers l'échangeur de chaleur (18, 118, 218), est logé dans le compartiment disposé au-dessus.

3. Système d'aération selon la revendication 1 ou 2, caractérisé en ce que, dans les locaux comportant des fenêtres disposées les unes à côté des autres dans une façade à baies, au moins un caisson, comportant au moins un compartiment pour un appareil d'aération, est disposé entre au moins deux fenêtres.

4. Système d'aération selon l'une des revendications 1 à 2, caractérisé en ce qu'un caisson (11), comportant au moins deux compartiments (15, 15', 15'', 115) disposés les uns à côté des autres destinés à au moins un appareil d'aération, s'étend en continu au-dessus d'une partie importante de la largeur considérée du local.

5. Système d'aération selon la revendication 4, caractérisé en ce que, dans le cas de rangées continues de fenêtres (12), le caisson, comportant les compartiments (15, 15', 15'', 115) disposés les uns à côté des autres, et destinés à au moins un appareil d'aération, s'étend essentiellement sur toute la largeur de la rangée de fenêtres.

6. Système d'aération selon la revendication 4 ou 5, caractérisé en ce que, dans les caissons (11) comportant au moins deux compartiments (15, 15', 15'', 115) disposés les uns à côté des autres et destinés chacun à au moins un appareil d'aération, les compartiments sont configurés de façon à être insonorisés les uns par rapport aux autres.

7. Système d'aération selon l'une des revendications 1 à 6, caractérisé en ce que chaque compartiment (15, 15', 15'', 115) possède au moins deux ouvertures (20, 21, 20', 21', 20'', 21'') dirigées vers l'extérieur et à distance les unes des autres, et au moins deux ouvertures (22, 23, 123) disposées vers l'intérieur du local.

8. Système d'aération selon l'une des revendications 1 à 7, caractérisé en ce que, dans un compartiment (15, 115) équipé d'un appareil de reprise d'air (16), leurs ouvertures (20, 21) dirigées vers l'extérieur sont obturées par l'appareil de reprise d'air (16), tandis que les ouvertures (22, 23, 123) disposées vers l'intérieur du local sont accouplées au guidage d'air de l'appareil d'aération.

9. Système d'aération selon l'une des revendications 1 à 7, caractérisé en ce que, dans un compartiment (15, 115), équipé d'un appareil d'aération (16) dont chacun comporte une fonction d'amenée d'air et une fonction d'air d'échappement (28, 29), ces ouvertures (20', 21', 22', 23', 123) dirigées vers l'intérieur et vers l'extérieur sont accouplées au guidage d'air de l'appareil d'aération (16).

10. Système d'aération selon l'une des revendications 1 à 7, caractérisé en ce que les compartiments (15'') qui ne sont pas nécessaires pour l'installation d'appareils d'aération sont chacun équipé d'une garniture (25) en un matériau isolant, configurée comme un tiroir modulaire, les ouvertures prévues pour la circulation de l'air, appartenant à chaque compartiment, étant obturées par ces garnitures.

11. Système d'aération selon l'une des revendications 1 à 10, caractérisé en ce que chaque compartiment (15, 15', 15'') du caisson (11, 111, 211) présente au moins un parement amovible (17, 17', 17'' ; 117) pour obturer une ouverture de tiroir.

12. Système d'aération selon la revendication 11, caractérisé en ce que le parement amovible (17, 17', 17'' ; 117) est configuré comme une paroi de caisson dirigée vers l'intérieur du local.

13. Système d'aération selon la revendication 12, caractérisé en ce que le parement amovible (17, 17', 17'' ; 117) comporte une sortie d'air (22, 22', 22'') dirigée vers l'échangeur de chaleur (18, 118, 218).

14. Système d'aération selon l'une des revendications 1 à 13, caractérisé en ce que les compartiments (115) du caisson présentent dans la direction verticale une dimension plus grande que les appareils d'aération, et que, quand les appareils d'aération sont encastrés, une gaine de guidage d'air (119), qui est pourvue, dans la zone des coins dirigée vers la fenêtre, d'un orifice d'entrée (123) pour l'air ambiant, s'étend entre ces appareils d'aération et l'obturation supérieure du compartiment considéré.
